# EUROPÄISCHE PATENTSCHRIFT

(11) **EP 3 908 166 B1**
(45) Veröffentlichungstag und Bekanntmachung des Hinweises auf die Patenterteilung: **13.03.2024**
(21) Anmeldenummer: 20700339.3
(22) Anmeldetag: 06.01.2020
(51) Int. Cl.: A47L 15/00, A47L 15/42

(54) **HAUSHALTSGERÄT, INSBESONDERE GESCHIRRSPÜLMASCHINE**
HOUSEHOLD APPLIANCE, IN PARTICULAR DISHWASHER
APPAREIL MÉNAGER, EN PARTICULIER LAVE-VAISSELLE

(30) Priorität: 07.01.2019 DE 102019100190
(43) Veröffentlichungstag der Anmeldung: 17.11.2021
(73) Patentinhaber: Miele & Cie. KG, 33332 Gütersloh (DE)
(72) Erfinder: KARA, Seyfettin, 32139 Spenge (DE); RIEDENKLAU, Eckard, 33647 Bielefeld (DE)
(86) Internationale Anmeldenummer: PCT/EP2020/050117
(87) Internationale Veröffentlichungsnummer: WO 2020/144128

(56) Entgegenhaltungen:
- WO-A2-2009/138359
- CN-A- 107 411 672
- DE-A1- 10 048 081
- DE-A1-102009 023 252
- DE-A1-102013 114 230
- DE-A1-102014 215 660
- KR-A- 20060 100 620
- US-A1- 2011 268 311

## Beschreibung

Die Erfindung betrifft Haushaltsgerät, insbesondere eine Geschirrspülmaschine, etwa eine Haushaltsgeschirrspülmaschine, mit einem einen Behandlungsraum bereitstellenden Behandlungsbehälter, der zur Beschickung mit Behandlungsgut eine Beschickungsöffnung aufweist, mit einer Behandlungsraumtür, mittels welcher die Beschickungsöffnung verschließbar ist, und mit einer Kamera, die der visuellen Erfassung des Behandlungsraums dient.

Geschirrspülmaschinen der gattungsgemäßen Art sind aus dem Stand der Technik an sich gut bekannt, so zum Beispiel aus der EP 3 205 764 A1.

Eine Geschirrspülmaschine der typischen Bauart verfügt über einen Spülbehälter, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dgl. handeln kann.

Zur Beladung einer Geschirrspülmaschine mit Spülgut kommt in der Regel ein Spülgutträger zum Einsatz, der durch die Beschickungsöffnung hindurch verfahren werden kann, und zwar entweder in den Spülraum hinein oder aus diesem heraus, je nach Verfahrbewegungsrichtung. Dabei verfügt eine Geschirrspülmaschine typischerweise über zwei oder drei Spülgutträger, je nach Bauform. In der Regel sind die Spülgutträger als Spülkörbe ausgebildet, wobei gemäß einer typischen Bauform ein Unterkorb, ein in Höhenrichtung der Geschirrspülmaschine darüber angeordneter Oberkorb sowie optional eine in Höhenrichtung oberhalb des Oberkorbs angeordnete Besteckschublade vorgesehen sind.

Aus der schon eingangs genannten EP 3 205 764 A1 ist eine gattungsgemäße Geschirrspülmaschine bekannt, die über zwei im Spülraum angeordnete Reinigungskameras verfügt. Diese Kameras dienen der Anschmutzungserkennung von in Spülkörben angeordnetem und zu reinigendem Spülgut.

Aus dem Stand der Technik ist ferner die Verwendung einer Kamera zur Beladungserkennung bekannt. So offenbart beispielsweise die WO 2017/032629 A1 eine gattungsgemäße Geschirrspülmaschine, die eine im Spülbehälter angeordnete Kameraeinheit aufweist. Dabei dient diese Kameraeinheit dazu, die Beladung der Spülkörbe mit zu reinigendem Spülgut zu detektieren.

Die CN 107 411 672 A offenbart eine Geschirrspülmaschine mit einer Kamera, mit der Spülgutteile identifiziert werden können und mit der eine Bewegung eines Roboterarm zum Ergreifen und Positionieren der Spülgutteile steuerbar ist.

Die WO 2009/138359 A2 offenbart einen Kühlschrank mit einer Kamera, die innerhalb des Kühlbehälters entlang einer Schiene motorisch verfahrbar ist.

Die DE 10 2013 114 230 A1 offenbart ein Gargerät mit einem Garraum und einem oberhalb des Garraums vorgesehenen Strömungskanal, in dem eine Kamera zur Erfassung der in den Garraum eingeführten Objekte angeordnet ist.

Obgleich sich die vorbekannten Konstruktionen im alltäglichen Praxiseinsatz bewährt haben, besteht Verbesserungsbedarf. Denn es hat sich gezeigt, dass eine vollständige Erfassung des Spülraums durch dafür vorgesehene Kameras nicht sicher gewährleistet ist, sei es zum Zwecke der Anschmutzungserkennung oder der Beladungserkennung. Es ist in diesem Zusammenhang insbesondere problematisch, dass der Erfassungsbereich einer Kamera durch eine verwenderseitige Individualbestückung eines Spülgutträgers versperrt sein kann. Die visuelle Erfassung des Spülraums durch die Kamera zwecks Beladungserkennung und/oder Anschmutzungserkennung ist dann in einem nur noch unzureichenden Maße möglich, so dass keine individuelle Anpassung des durchzuführenden Reinigungsprogramms an eine erkannte Beladung und/oder Anschmutzung erfolgen kann. Im Ergebnis ist zur Sicherstellung eines wünschenswerterweise zu erzielenden Reinigungsergebnisses ein vollumfängliches Reinigungsprogramm durchzuführen, was unter Umständen in Anbetracht der tatsächlich zu bewältigenden, aber nicht erkannten Reinigungsaufgabe zu einem erhöhten Wasser- und/oder Energieverbrauch führt.

Um dem vorstehenden Problem Rechnung zu tragen, ist es aus dem Stand der Technik bekannt, mehrere Kameras einzusetzen, so zum Beispiel aus der vorstehend genannten EP 3 205 764 A1, die den Einsatz von zwei im Spülraum angeordneten Reinigungskameras vorschlägt. Eine solche Ausgestaltung ist aber in nachteiliger Weise aufwendig und teuer und kann darüber hinaus nicht sicherstellen, dass der Spülraum vollständig erfass wird, insbesondere dann nicht, wenn eine verwenderseitige Individualbestückung der Spülgutträger vorliegt, die entweder den Erfassungsbereich der einen oder der anderen Kamera oder sogar den Erfassungsbereich beider Kameras gleichermaßen versperrt.

Es ist ausgehend vom Vorbeschriebenen die **Aufgabe** der Erfindung, ein Haushaltsgerät der eingangs genannten Art dahingehend weiterzuentwickeln, dass eine möglichst vollständige visuelle Erfassung des Behandlungsraums gestattet ist, und zwar auch dann, wenn eine verwenderseitige Individualbestückung der Behandlungsgutträger vorliegt.

Zur **Lösung** dieser Aufgabe wird mit der Erfindung ein Haushaltsgerät mit den Merkmalen von Anspruch 1 vorgeschlagen.

In Abkehr zum Stand der Technik wird mit der Erfindung vorgeschlagen, anstelle einer unveränderbaren Kamerablickrichtung einen variablen und damit einstellbaren Erfassungsbereich der Kamera vorzusehen. Dies gestattet es in vorteilhafter Weise, unterschiedliche Blickrichtungen der Kamera einzustellen, so dass wahlweise unterschiedliche Bereiche des Behandlungsraums bzw. des Spülraums erfasst werden können. Dies ist insbesondere aus zweierlei Gründen von Vorteil. Zum einen lassen sich mit nur einer Kamera die einzelnen Behandlungsgutträger, bzw. Spülgutträger separat voneinander erfassen. Es besteht insoweit die Möglichkeit, durch entsprechende Einstellung der Blickrichtung der Kamera die einzelnen Behandlungsgutträger bzw. Spülkörbe der Reihe nach visuell zu erfassen. Zum anderen lässt sich bei einer verwenderseitigen Individualbestückung eines der Behandlungsgutträger bzw. Spülgutträgers die Blickrichtung der Kamera so anpassen, dass eine ungewollte Versperrung des Kamera-Erfassungsbereichs vermieden ist.

Die erfindungsgemäße Ausgestaltung des einstellbaren Erfassungsbereichs der Kamera gestattet es im Ergebnis, den Spülraum in Gänze visuell erfassen zu können, und zwar unabhängig von einer verwenderseitigen Individualbestückung der vom Behandlungsraum, bzw. Spülraum beherbergten Behandlungsgutträger bzw. Spülgutträger. Und dies mit nur einer Kamera, was den gesamten konstruktiven Aufbau einfach und kostengünstig hält.

Die Erfindung hat besondere Vorteile für eine Geschirrspülmaschine. Es wird somit insbesondere eine Geschirrspülmaschine, etwa Haushaltsgeschirrspülmaschine, vorgeschlagen mit einem einen Spülraum bereitstellenden Spülbehälter, der zur Beschickung mit zu reinigendem Spülgut eine Beschickungsöffnung aufweist, mit einer Spülraumtür, mittels welcher die Beschickungsöffnung, insbesondere fluiddicht, verschließbar ist, und mit einer Kamera, die der visuellen Erfassung des Spülraums dient, wobei der von der Kamera erfassbare Bereich des Spülraums einstellbar ist. Im Folgenden wird die Erfindung für das Beispiel Geschirrspülmaschine beschrieben. Die beschriebenen Merkmale können jedoch erfindungsgemäß ebenso in anderen Haushaltgeräte verwirklicht sein.

Zwecks Einstellung, d.h. variabler Anpassung des von der Kamera erfassten Bereichs werden mit der Erfindung zwei Alternativen vorgeschlagen. Gemäß einer ersten Alternative ist die Kamera verschieb- und/oder verschwenkbar gelagert. Gemäß einer zweiten Alternative wirkt die Kamera mit einer optischen Einrichtung zusammen, wobei die optische Einrichtung verschieb- und/oder verschwenkbar gelagert ist. Im Ergebnis beider Ausführungsalternativen steht, dass der von der Kamera erfassbare Bereich des Spülraums variabel anpassbar, d.h. einstellbar ist.

Gemäß der ersten Alternative ist die Kamera verschieb- und/oder verschwenkbar gelagert. Danach ist die Kamera translatorisch verfahrbar und/oder verschwenkbar gelagert, wobei auch eine Verschwenkung der Kamera um zwei senkrecht zueinanderstehende Drehachsen vorgesehene sein kann. Im Ergebnis lässt sich die Kamera flexibel, insbesondere in jede gewünschte Blickrichtung verfahren, so dass eine visuelle Erfassung des gesamten Spülbehälterinnenraums möglich ist.

Die Kamera ist gemäß einem weiteren Merkmal der Erfindung als Teil einer Kameraeinheit ausgebildet, wobei die Kameraeinheit verschieb- und/oder verschwenkbar gelagert ist. Gemäß dieser bevorzugten Ausführungsform ist nicht nur allein die Kamera, sondern die die Kamera beinhaltende Kameraeinheit entsprechend verschieb- und/oder verschwenkbar gelagert ausgebildet.

Die Kameraeinheit verfügt gemäß einem weiteren Merkmal der Erfindung über ein Gehäuse, in dem die Kamera angeordnet ist. Dabei ist die Kamera beispielsweise als Kamera-Chip ausgebildet.

Das Gehäuse der Kameraeinheit nimmt bevorzugter Weise des Weiteren eine mit der Kamera zusammenwirkende Optik auf. Dabei dient die Optik insbesondere dazu, eine für die visuelle Erfassung des Spülraums optimierte Ausgestaltung zu erreichen. Insbesondere ist es erwünscht, ein auch über die Tiefe des Spülraums möglichst scharfe Bilderfassung zu ermöglichen.

Die Kameraeinheit weist gemäß einem weiteren Merkmal der Erfindung vorzugsweise Leuchtmittel auf, beispielsweise in der Ausgestaltung als LEDs. Die Leuchtmittel dienen im bestimmungsgemäßen Verwendungsfall zur Ausleuchtung des Spülraums, was eine visuelle Erfassung desselben verbessert. Auf separat im Spülraum anzuordnende Leuchtmittel kann gemäß dieser Ausführungsform der Erfindung verzichtet werden.

Das Vorsehen einer Kameraeinheit, die verschieb- und/oder verschwenkbar gelagert ist, bringt den Vorteil mit sich, dass im Verschiebe- und/oder Verschwenkfall nicht nur die Kamera, sondern auch die dazugehörige Optik sowie die unter Umständen vorgesehenen Leuchtmittel mit verschoben und/oder verschwenkt werden. Dies stellt eine stets optimierte Bilderfassung sicher.

Gemäß der schon vorstehend genannten zweiten Ausführungsalternative der Erfindung ist eine mit der Kamera oder der Kameraeinheit zusammenwirkende optische Einrichtung vorgesehen. Dabei ist nicht die Kamera oder die Kameraeinheit, sondern die optische Einrichtung verschieb- und/oder verschwenkbar gelagert.

Gemäß dieser Ausgestaltung erfolgt eine Einstellung des Erfassungsbereichs der Kamera also nicht dadurch, dass die Kamera oder die Kameraeinheit verschoben oder verschwenkt wird, sondern dadurch, dass eine Einstellung des Erfassungsbereichs der Kamera oder der Kameraeinheit durch die optische Einrichtung bewirkt wird, indem die optische Einrichtung verschoben und/oder verschwenkt wird. Von Vorteil dieser Ausgestaltung ist, dass die Kamera oder die Kameraeinheit feststehend ausgebildet ist.

Die optische Einrichtung stellt gemäß einem weiteren Merkmal der Erfindung eine reflektierende Fläche bereit. Im einfachsten Fall ist die optische Einrichtung durch einen Spiegel gebildet, der eine Umlenkung der Blickrichtung der Kamera oder der Kameraeinheit bewirkt. Eine Verstellung der Lage des Spiegels führt dann auch zu einer veränderten Blickrichtung der Kamera oder der Kameraeinheit mit dem Ergebnis, dass der Erfassungsbereich der Kamera oder der Kameraeinheit eingestellt ist.

Es ist gemäß einem weiteren Merkmal der Erfindung ein Antrieb für die Kamera, die Kameraeinheit und/oder die optische Einrichtung vorgesehen. Demgemäß erfolgt eine Verschiebe- und/oder Verschwenkbewegung der Kamera, der Kameraeinheit oder der optischen Einrichtung mittels eines entsprechenden Antriebs, was eine Automatisierung der Verschiebe- und/oder Verschwenkbewegung in Abhängigkeit vorgebbarer Parameter gestattet.

Gemäß einer ersten Ausführungsform weist der Antrieb ein Thermoelement auf. Bei diesem Thermoelement handelt es sich beispielsweise um ein solches, das sich in Abhängigkeit der Temperatur der im Spülbehälter umgewälzten Spülflotte ausdehnt bzw. zusammenzieht. Dementsprechend ergibt sich eine Verschiebe- und/oder Verschwenkbewegung der Kamera, der Kameraeinheit und/oder der optischen Einrichtung.

Gemäß einer alternativen und bevorzugten Ausführungsform verfügt der Antrieb über einen Elektromotor. Dabei gestattet es der Elektromotor, eine Verfahr- und/oder Verschwenkbewegung der Kamera, der Kameraeinheit und/oder der optischen Einrichtung wahlweise oder durch eine Steuereinheit in Abhängigkeit von vorgebbaren Parametern vorzunehmen.

Gemäß einem weiteren Merkmal der Erfindung ist vorgesehen, dass die Kamera, die Kameraeinheit und/oder die optische Einrichtung innerhalb eines von der Spülraumtür bereitgestellten Hohlraums angeordnet sind. Es ist so eine fluiddichte Unterbringung innerhalb der Spülraumtür gewährleistet. Zwecks visueller Erfassung des Spülraums ist das Türinnenblech der Spülraumtür mit einem entsprechenden Durchbruch ausgerüstet, das fluiddicht mittels einer Abdeckung, beispielsweise einer Scheibe aus Glas oder Kunststoff verschlossen ist. Im bestimmungsgemäßen Verwendungsfall findet durch diesen Durchbruch hindurch eine visuelle Erfassung des Spülraums mittels der Kamera oder der Kameraeinheit statt.

Gemäß einem weiteren Merkmal der Erfindung ist eine Schwenkvorrichtung vorgesehen, die die Kamera oder die Kameraeinheit trägt und mittels welcher die Kamera oder die Kameraeinheit verschwenkbar ist, vorzugsweise um zwei senkrecht aufeinander stehende Drehachsen. So kann beispielsweise vorgesehen sein, dass bei verschlossener Spülraumtür eine Verschwenkbewegung der Kamera oder der Kameraeinheit um eine vertikal ausgerichtete Schwenkachse einerseits und um eine horizontal ausgerichtete Schwenkachse andererseits stattfinden kann. In der Überlagerung beider Verschwenk- und/oder Drehbewegungen ist eine vollständige Erfassung des Spülraums möglich.

Gemäß einem weiteren Merkmal der Erfindung ist vorgesehen, dass die Verschiebe- und/oder Verschwenkbewegung der Kamera oder der Kameraeinheit fernsteuerbar ist. Zu diesem Zweck ist eine Bedien- oder Steuereinheit vorgesehen, die in funkkommunikationstechnischer Verbindung mit einem verwenderseitig genutzten Bediengerät steht. Bei dem Bediengerät kann es sich beispielsweise um ein mobiles Empfangsgerät, wie zum Beispiel einen Tabletcomputer handeln. Auf diesem kann sowohl eine Anzeige des von der Kamera oder der Kameraeinheit erfassten Bildes des Spülraums stattfinden, als auch eine Bedienung der Kamera oder der Kameraeinheit zwecks Verfahren und/oder Verschwenken derselben.

Gemäß einem weiteren Merkmal der Erfindung ist ein Verschlusselement vorgesehen, das aus einer die Kamera oder die Kameraeinheit abdeckenden Verschlussstellung in eine die Kamera oder die Kameraeinheit freigebenden Gebrauchsstellung und umgekehrt überführbar ist.

Das Verschlusselement erbringt im Wesentlichen zwei Vorteile. Bei geschlossener Spülraumtür befindet sich das Verschlusselement in der Gebrauchsstellung, in der die Kamera oder die Kameraeinheit freigegeben ist. In dieser Stellung des Verschlusselements kann im bestimmungsgemäßen Verwendungsfall eine visuelle Erfassung des Spülrauminneren durch die Kamera oder die Kameraeinheit stattfinden. Bei geöffneter Spülraumtür, wenn also eine Beschickung der Geschirrspülmaschine durch einen Verwender stattfinden kann, befindet sich das Verschlusselement in seiner Verschlussstellung, in welcher die Kamera oder die Kameraeinheit abgedeckt ist. Hierdurch ist bewirkt, dass eine Verschmutzung der Kamera oder der Kameraeinheit bzw. der zugehörigen Optik durch beim Bestücken des Spülraums mit zu reinigendem Spülgut herunterfallende und/oder strömende Speisereste, Verunreinigungen und/oder sonstige Festkörper oder Flüssigkeiten sicher vermieden ist. Zudem ist in der Verschlussstellung des Verschlusselements eine mechanische Sicherheit für die Kamera bzw. die Kameraeinheit vor herunterfallenden Spülgütern gegeben.

Das Verschlusselement bewirkt einen weiteren Vorteil. Eine Bilderfassung durch die Kamera oder die Kameraeinheit bei geöffneter Spülraumtür ist bei einem sich in Verschlussstellung befindlichem Verschlusselement ausgeschlossen. Durch die Kamera oder die Kameraeinheit kann also weder die Umgebung der Geschirrspülmaschine noch ein Verwender der Geschirrspülmaschine erfasst werden, was insbesondere aus datentechnischen oder datenschutztechnischen Gründen von Vorteil ist.

Mit dem Verschlusselement ist mithin insgesamt erreicht, dass eine bestimmungsgemäße Bilderfassung nur des Spülraums stattfinden kann. Zudem sind hinsichtlich der Kamera oder der Kameraeinheit ein Verschmutzungsschutz sowie ein Schutz vor mechanischer Beanspruchung durch versehentlich herunterfallendes Spülgut gegeben.

Die Geschirrspülmaschine ist gemäß einem weiteren Merkmal der Erfindung durch Mittel gekennzeichnet, die ein Überführen des Verschlusselements aus der Verschlussstellung in die Gebrauchsstellung und umgekehrt in Abhängigkeit der Stellung der Spülraumtür bewirken. Ein manueller Eingriff zum Überführen des Verschlusselements aus der einen Stellung in die andere Stellung oder umgekehrt ist gemäß dieser Ausführungsform nicht erforderlich. Es findet vielmehr ein automatisches Verfahren des Verschlusselements statt, und zwar vorzugsweise in Abhängigkeit der Stellung der Spülraumtür, was durch entsprechend dafür vorgesehene Mittel bewirkt ist. Bei diesen Mitteln kann es sich beispielsweise um eine Seilzuganordnung handeln, die in Abhängigkeit des Öffnungswinkels der Spülraumtür auf das Verschlusselement einwirkt. Es kann alternativ auch eine Hebelanordnung mit einem Kontergewicht vorgesehen sein, das schwerkraftbedingt bei einem Verschwenken der Spülraumtür eine Verfahrbewegung des Verschlusselements bewirkt.

Mit der Erfindung wird insgesamt eine Konstruktion vorgeschlagen, die es gestattet, die Blickrichtung der Kamera oder der Kameraeinheit und damit den Erfassungsbereich der Kamera oder der Kameraeinheit zu verändern, indem entweder die Position und Ausrichtung der Kamera oder der Kameraeinheit geändert oder die Position und Ausrichtung einer mit der Kamera oder der Kameraeinheit zusammenwirkenden optischen Einrichtung geändert wird. Dies gestattet es, den gesamten Spülraum visuell zu erfassen, wobei auch eine Anpassung der Blickrichtung der Kamera oder der Kameraeinheit in Abhängigkeit einer verwenderseitigen Individualbestückung des Spülraums mit Spülgut gestattet ist.

Weitere Merkmale und Vorteile der Erfindung ergeben sich aus der nachfolgenden Beschreibung anhand der Figuren. Dabei zeigen
- Fig. 1: in rein schematischer Seitenansicht eine erfindungsgemäße Geschirrspülmaschine als Beispiel für ein erfindungsgemäßes Haushaltsgerät;
- Fig. 2: die Geschirrspülmaschine nach Fig. 1, wobei unterschiedliche Erfassungsbereiche dargestellt sind;
- Fig. 3: in schematischer Ausschnittsdarstellung eine erste Ausführungsform nach der Erfindung;
- Fig. 4: in schematischer Ausschnittsdarstellung eine zweite Ausführungsform nach der Erfindung;
- Fig. 5: in schematischer Ausschnittsdarstellung eine Ausführungsform nach der Erfindung gemäß einer ersten Kamerastellung;
- Fig. 6: in schematischer Ausschnittsdarstellung eine Ausführungsform nach der Erfindung gemäß einer zweiten Kamerastellung;
- Fig. 7: in schematischer Ausschnittsdarstellung eine vierte Ausführungsform nach der Erfindung;
- Fig. 8: in schematischer Ausschnittsdarstellung eine fünfte Ausführungsform nach der Erfindung;
- Fig. 9: in einer ersten perspektivischen Ansicht eine Schwenkvorrichtung nach der Erfindung;
- Fig. 10: gemäß einer zweiten perspektivischen Ansicht die Schwenkvorrichtung nach Fig. 9;
- Fig. 11: in schematischer Seitenansicht die Schwenkvorrichtung nach den Figuren 9 und 10 mit einer Scheibe als Abdeckung;
- Fig. 12: die Schwenkvorrichtung nach Fig. 11 ohne Abdeckung;
- Fig. 13: in schematischer Darstellung eine erste erfindungsgemäße Verwendung;
- Fig. 14: in schematischer Darstellung eine zweite erfindungsgemäße Verwendung;
- Fig. 15: in schematischer Darstellung eine dritte erfindungsgemäße Verwendung;
- Fig. 16: in schematischer Ausschnittsdarstellung eine sechste Ausführungsform der Erfindung;
- Fig. 17: in schematischer Ausschnittsdarstellung eine siebte Ausführungsform der Erfindung;
- Fig. 18: in schematischer Draufsicht die Ausführungsform nach Fig. 17;
- Fig. 19: in schematischer Darstellung die Funktionsweise der Ausführungsform nach Fig. 17 gemäß einer ersten Stellung;
- Fig. 20: in schematischer Darstellung die Funktionsweise der Ausführungsform nach Fig. 17 gemäß einer zweiten Stellung; und
- Fig. 21: in schematischer Darstellung die Funktionsweise der Ausführungsform nach Fig. 17 gemäß einer dritten Stellung.

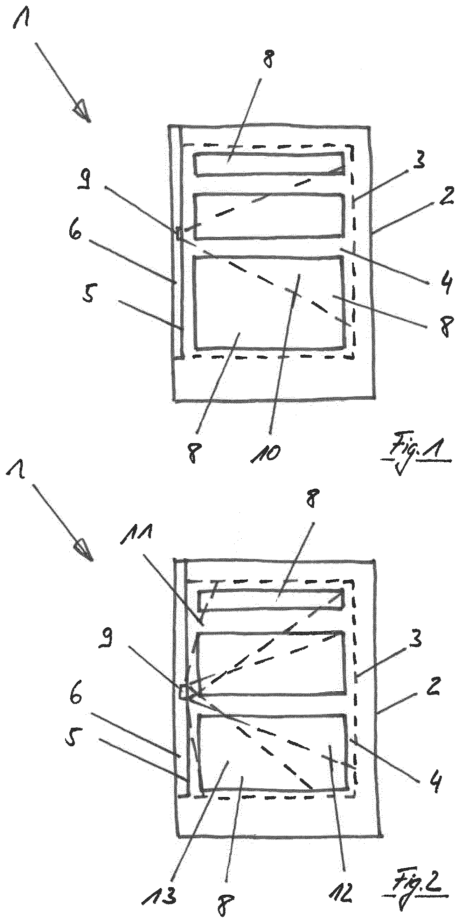

Fig. 1 lässt in rein schematischer Seitenansicht eine Geschirrspülmaschine 1 nach der Erfindung erkennen.

Die Geschirrspülmaschine 1 verfügt über ein Gehäuse 2, das unter anderem einen Spülbehälter 3 aufnimmt. Der Spülbehälter 3 stellt seinerseits einen Spülraum 4 bereit, der im bestimmungsgemäßen Verwendungsfall der Aufnahme von zu reinigendem Spülgut 7 dient.

Im gezeigten Ausführungsbeispiel dienen zur Aufnahme des zu reinigenden Spülguts 7 Spülgutträger 8, und zwar in der Ausgestaltung als Spülgutkörbe, wobei ein Unterkorb, ein Oberkorb sowie eine Besteckschublade vorgesehen sind.

Der Spülraum 4 ist verwenderseitig durch eine Beschickungsöffnung 5 hindurch zugänglich. Mittels einer Spülraumtür 6 ist die Beschickungsöffnung 5 fluiddicht verschließbar, wobei die Spülraumtür 6 um eine horizontal verlaufende Schwenkachse verschwenkbar ist und verwenderseitig aus der in Fig. 1 gezeigten Verschlussstellung in eine Offenstellung und umgekehrt überführt werden kann.

Die Geschirrspülmaschine 1 verfügt des Weiteren über eine Kamera 9, die gemäß der gezeigten Ausführungsbeispiele von der Spülraumtür 5 bereitgestellt ist. Die Kamera 9 dient der visuellen Erfassung des Spülraums 4, wobei sie gemäß der Darstellung nach Fig. 1 den Bereich 10 erfasst, der einen Teilbereich des Spülraums 4 abdeckt. Wie die beispielhafte Darstellung nach Fig. 1 in diesem Zusammenhang erkennen lässt, deckt der Erfassungsbereich 10 den unteren Spülgutträger 8, d.h. den Unterkorb nur zum Teil und den zu oberst angeordneten Spülgutträger 8, d.h. die Besteckschublade gar nicht ab.

Erfindungsgemäß ist deshalb vorgesehen, dass der Erfassungsbereich 10 der Kamera 9 einstellbar ist. Dies ist in Fig. 2 gezeigt. Zu erkennen ist hier, dass der Erfassungsbereich 10 der Kamera 9 nach Fig. 1 verändert werden kann, so dass sich die in Fig. 2 beispielhaft dargestellten Erfassungsbereiche 11, 12 und 13 ergeben, die sich zum Teil auch überlappen. In der Summe decken die Erfassungsbereiche 11, 12 und 13 den Spülraum 4 vorzugsweise vollständig, zumindest aber annähernd vollständig ab, so dass sämtliche Spülgutträger 8 gleichermaßen visuell erfasst werden können, was in vorteilhafter Weise unter anderem eine aussagekräftige Anschmutzungs- und/oder Beladungserkennung gestattet.

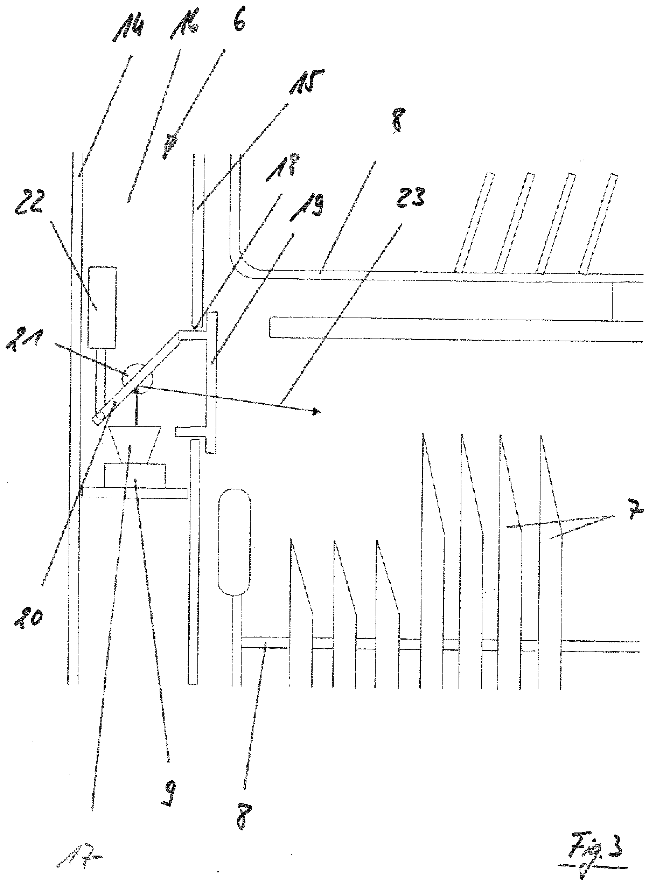

Zur Einstellung des Erfassungsbereichs 10 der Kamera 9 werden mit der Erfindung zwei Alternativen vorgeschlagen. Gemäß einem ersten Lösungsvorschlag ist die Kamera 9 verschieb- und/oder verschwenkbar gelagert. Demnach kann die Blickrichtung der Kamera 9 zur Einstellung des Erfassungsbereichs 10 durch Verschieben und/oder Verfahren der Kamera 9 eingestellt werden. Alternativ hierzu kann eine mit der Kamera 9 zusammenwirkende optische Einrichtung vorgesehen sein, die ihrerseits verschieb- und/oder verschwenkbar gelagert ist. Demnach kommt eine an sich feststehende Kamera 9 zum Einsatz, wobei die Blickrichtung der Kamera 9 durch ein Verschieben und/oder Verschwenken der optischen Einrichtung variierbar ist, was im Ergebnis zu einer Einstellung des Erfassungsbereichs 10 führt. Die weiteren Figuren 3 bis 21 lassen unterschiedliche Ausführungsformen im Detail erkennen.

Gemäß der in Fig. 3 gezeigten Ausführungsform ist eine Kamera 9 vorgesehen, die mit einer Optik 17 zusammenwirkt. Die Kamera 9 samt Optik 17 ist feststehend in einem Hohlraum 16 der Spülraumtür 6 angeordnet. Dabei ergibt sich der Hohlraum 16 durch die beabstandete Anordnung von Türaußenblech 14 und Türinnenblech 15.

Das Türinnenblech weist einen Durchbruch 18 auf, durch den hindurch in Entsprechung des Pfeils 23 eine visuelle Erfassung des Spülraums 4 mittels der Kamera 9 stattfinden kann. Dabei ist der Durchbruch 18 fluiddicht mittels einer als Scheibe ausgebildeten Abdeckung verschlossen.

Die Kamera 9 wirkt mit einer optischen Einrichtung in der Ausgestaltung eines Spiegels 20 zusammen. Dieser ist verschwenkbar um einen Drehpunkt 21 angeordnet. Zur Einleitung einer Verdrehbewegung des Spiegels 20 dient ein Antrieb 22, bei dem es sich beispielsweise um einen Elektromotor oder um ein Thermoelement handeln kann.

Wie die Darstellung nach Fig. 3 erkennen lässt, lässt sich der Blickwinkel der Kamera 9, d.h. der von der Kamera erfasste Bereich des Spülraums 4 durch Verdrehbewegung des Spiegels 20 einstellen.

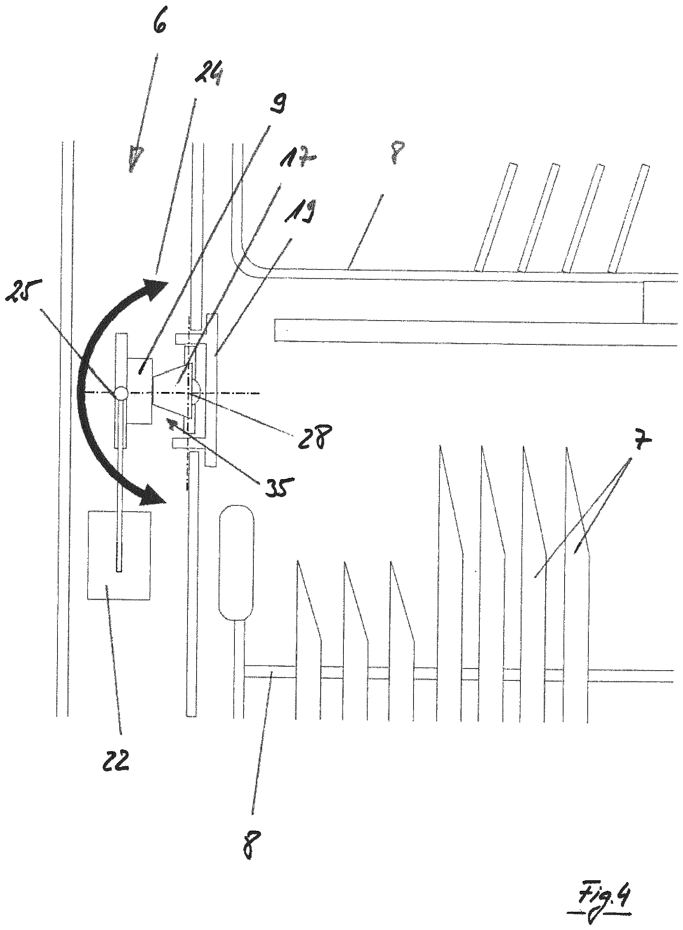

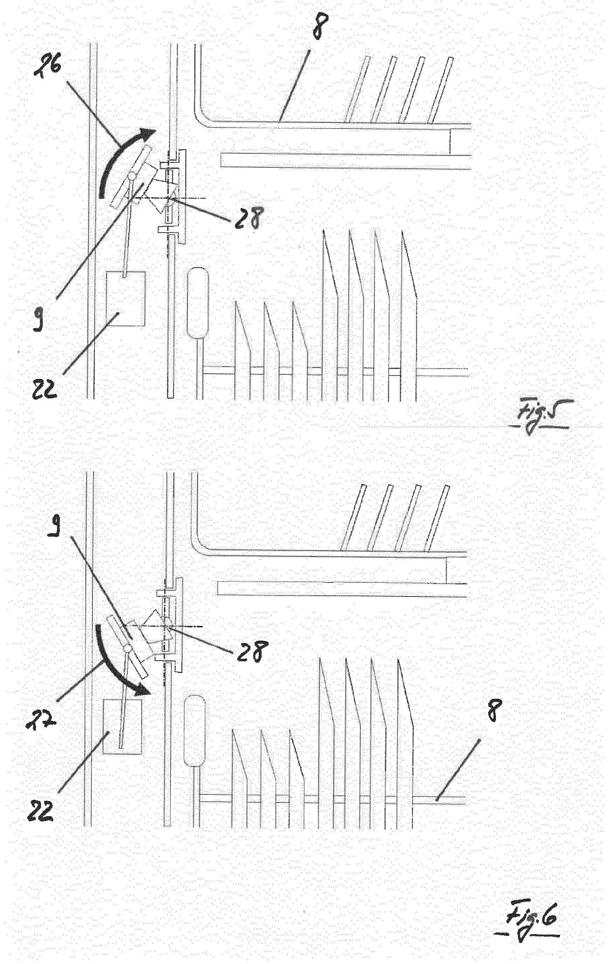

Fig. 4 lässt eine zweite Ausführungsform erkennen. Gemäß dieser Ausführungsform ist die Kamera 9 selbst verfahrbar ausgebildet. Es ist zu diesem Zweck ein Antrieb 22 vorgesehen, der auf die Kamera 9 einwirkt, wobei die Kamera 9 in Entsprechung des Pfeils 24 eine Verschwenkbewegung um den Drehpunkt 28 vollführen kann. Der Drehpunkt 28 befindet sich dabei im Bereich der mit der Kamera 9 zusammenwirkenden Optik 17, womit der Anlenkpunkt 25 und der Drehpunkt 28 unter Zwischenordnung eines Hebelarms beabstandet voneinander angeordnet sind Die Figuren 5 und 6 lassen unterschiedliche Ausrichtungen der Kamera 9 erkennen, wobei gemäß Fig. 5 der Unterkorb von der Kamera 9 erfasst ist, wohingegen gemäß Fig. 6 der Oberkorb und die darüber befindliche und in Fig. 6 nicht dargestellte Besteckschublade erfasst sind. Dabei ergibt sich die Kamerastellung nach Fig. 5 ausgehend von der Stellung nach Fig. 4 durch Verschwenken der Kamera 9 in Entsprechung des Pfeils 26. Die Stellung der Kamera 9 nach Fig. 6 ergibt sich indes durch ein Verschwenken der Kamera 9 in Entsprechung des Pfeils 27.

Gemäß dem Ausführungsbeispiel nach den Figuren 4 bis 7 ist die Kamera 9 als Teil einer Kameraeinheit 35 ausgebildet. Diese Kameraeinheit 35 stellt nicht nur die Kamera 9 als solche, sondern auch die damit zusammenwirkende Optik 17 bereit. Ein Verschwenken der Kameraeinheit 35 bewirkt mithin nicht nur ein Verschwenken der Kamera 9, sondern auch ein Verschwenken der damit zusammenwirkenden Optik 17.

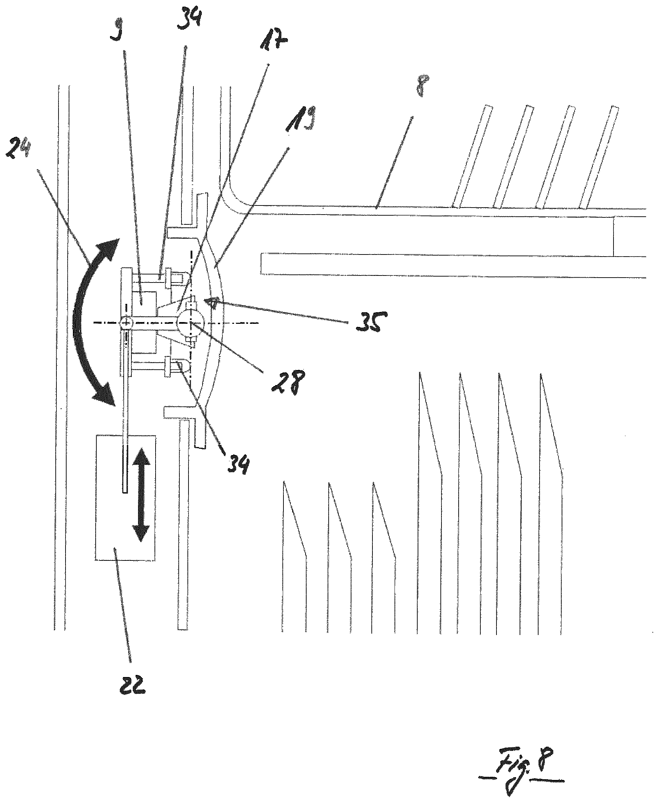

Die Kamera 9 und die damit zusammenwirkende Optik 17 können in einem gemeinsamen Gehäuse untergebracht sein, was der besseren Übersicht wegen in den Figuren im Einzelnen nicht dargestellt ist. Gemäß der Ausführungsform nach Fig. 8 kann die Kameraeinheit 35 des Weiteren Leuchtmittel 34 in Form von beispielsweise LEDs umfassen. Ein Verschwenken der Kameraeinheit 35 führt mithin zu einem gemeinsamen Verschwenken von Kamera 9, Optik 17 sowie der zugehörigen Leuchtmittel 34.

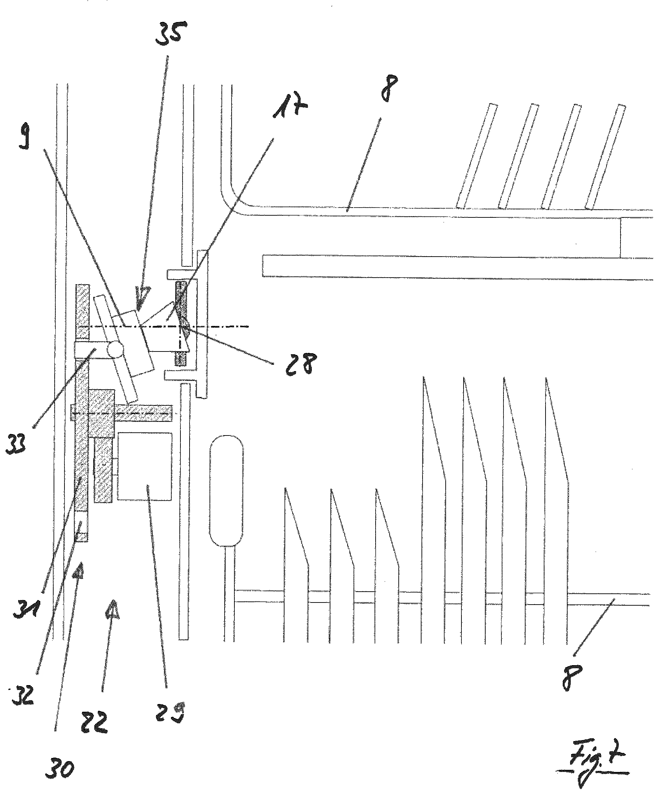

Gemäß der Ausführungsform nach Fig. 7 ist ein Antrieb 22 vorgesehen, der einen Elektromotor 29 aufweist. Dieser steht in Wirkverbindung mit einem Getriebe 30, das eine Drehscheibe 31 aufweist. Die Drehscheibe 31 verfügt über eine umlaufende Nut 32, in die ein mit der Kameraeinheit 35 gekoppelter Führungsstift eingreift. Bei einer durch den Elektromotor 29 bewirkten Verdrehbewegung der Drehscheibe 31 kommt es zu einer entsprechenden Verfahrbewegung des in der umlaufenden Nut geführten Führungsstiftes 33, was wiederum zu einer entsprechenden Verschwenkbewegung der Kameraeinheit 35 führt.

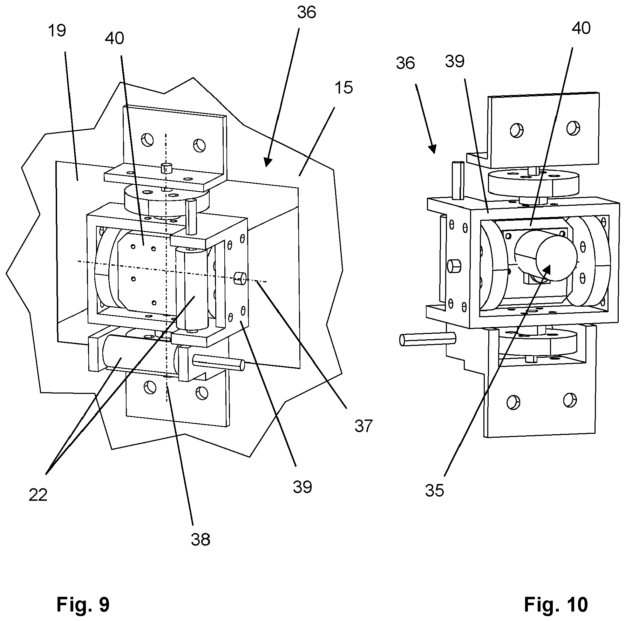

Die Figuren 9 und 10 lassen eine Schwenkvorrichtung 36 zur Aufnahme einer Kameraeinheit 35 erkennen, die beispielsweise im Hohlraum 16 der Spülraumtür 6 angeordnet ist.

Die Schwenkvorrichtung 36 verfügt über ein Schwenkteil 40 einerseits und über ein Drehteil 39 andererseits. Mittels zweier Antriebe 22 können sowohl das Drehteil 39 verdreht als auch das Schwenkteil 40 verschwenkt werden. Dabei findet eine Verdrehbewegung des Drehteils 39 um die Drehachse 38 statt, wohingegen ein Verschwenken des Schwenkteils 40 um die Dreh- oder Schwenkachse 37 stattfindet. In der Überlagerung dieser beiden Verdreh- bzw. Verschwenkbewegungen kann die vom Schwenkteil 40 aufgenommene Kameraeinheit 35 derart verfahren werden, dass der gesamte Spülbehälterinnenraum visuell erfasst werden kann.

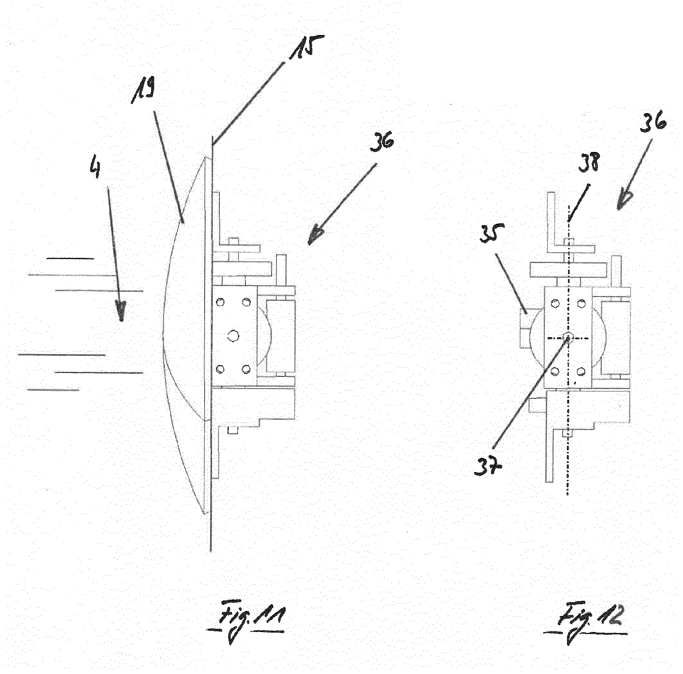

Die Figuren 11 und 12 lassen die Schwenkvorrichtung 36 jeweils in einer Seitenansicht erkennen, wobei Fig. 11 die Anbindung der Schwenkvorrichtung 36 an das Türinnenblech 15 der Spülraumtür 6 erkennen lässt. Spülraumseitig ist der entsprechende im Türinnenblech 15 vorgesehene Durchbruch fluiddicht mittels einer transparenten Scheibe 19 abgedeckt.

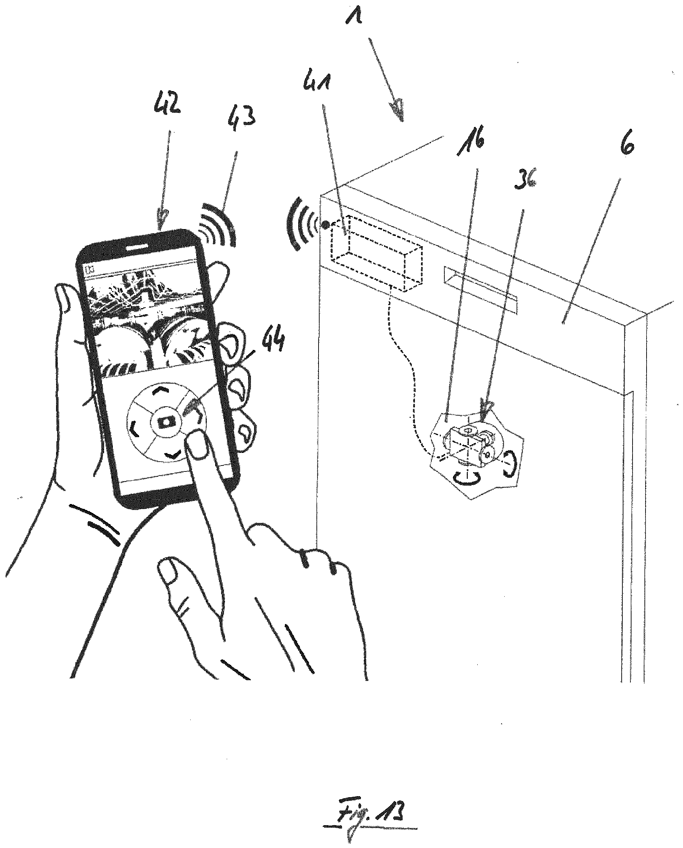

Gemäß dem Ausführungsbeispiel nach Fig. 13 kann eine Fernbedienung der Schwenkvorrichtung 36 stattfinden. Es sind zu diesem Zweck eine geschirrspülmaschinenseitige Bedien- und Steuereinheit 41 sowie ein mobiles Empfangsgerät 42 vorgesehen, wobei das Empfangsgerät 42 durch einen Verwender der Geschirrspülmaschine 1 zu bedienen ist. Das mobile Empfangsgerät 42 steht über eine Funkverbindung 43 mit der geschirrspülmaschinenseitigen Bedien- und Steuereinheit 41 in kommunikationstechnischer Verbindung. Der Anschluss der Schwenkvorrichtung 36 an die Bedien- und Steuereinheit 41 ist vorzugsweise kabelgestützt, kann aber auch mittels Funkverbindung ausgebildet sein. Es ist aber auch möglich, dass die Schwenkvorrichtung 36 unmittelbar mit dem mobilen Empfangsgerät 42 über eine Funkverbindung in Verbindung steht.

Mittels des mobilen Empfangsgerätes 42 kann sowohl das von der Kameraeinheit 35 erfasste Bild dargestellt werden, als auch eine Fernbedienung der Schwenkvorrichtung 36 vorgenommen werden, beispielsweise durch entsprechende Pfeilsymbolik 44, die vom mobilen Empfangsgerät 42 bereitgestellt ist.

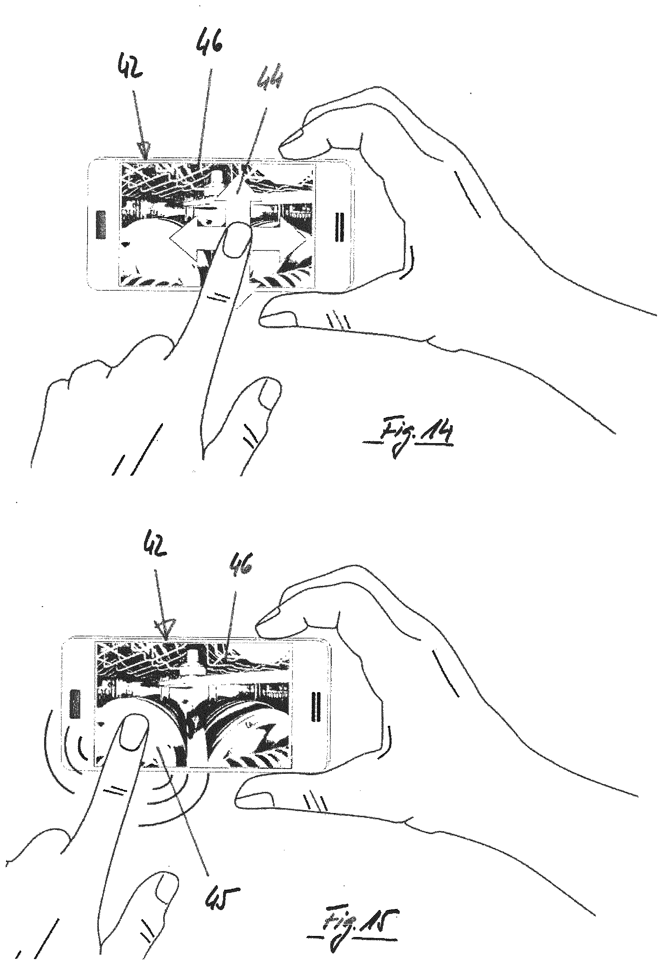

Die Figuren 14 und 15 zeigen weitere Anwendungsformen. Dabei zeigt Fig. 14 eine Anwendungsform, dergemäß in den vom mobilen Empfangsgerät 42 dargestellten Bild 46 durch entsprechende Wischbewegung gemäß der Pfeilsymbolik 44 eine Steuerung der Schwenkvorrichtung 36 vorgenommen werden kann. Gemäß dem Anwendungsbeispiel nach Fig. 15 erfolgt eine Verschwenkbewegung der Schwenkvorrichtung 36 dadurch, dass verwenderseitig auf das vom mobilen Empfangsgerät 42 dargestellte Bild 46 ein individueller Beobachtungspunkt 45 angewählt wird. Auf diesem Beobachtungspunkt 45 schwenkt dann die Schwenkvorrichtung 36 die Kameraeinheit 35 ein.

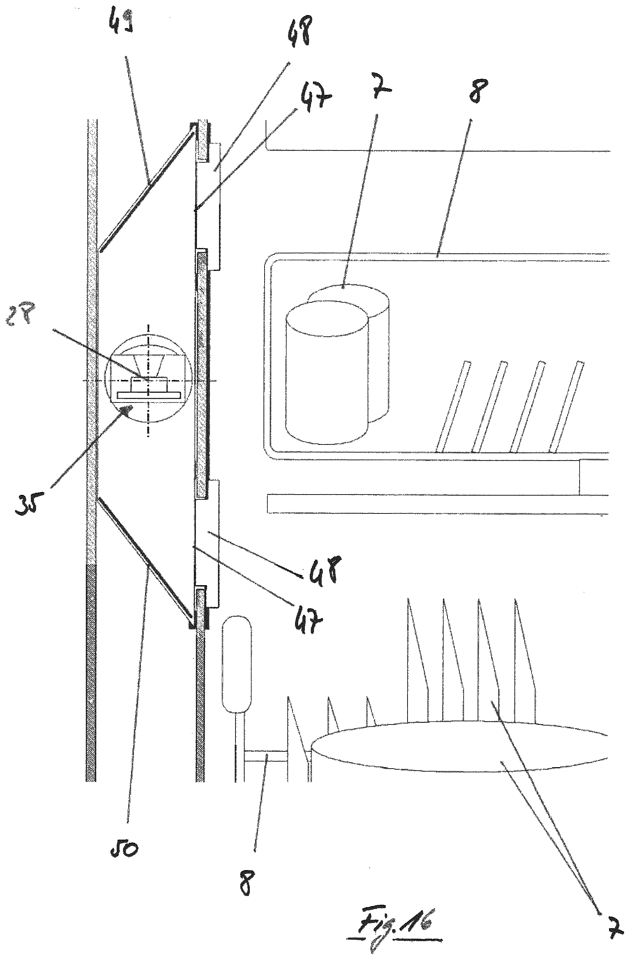

Fig. 16 lässt eine weitere Ausführungsform erkennen. Gemäß dieser Ausführungsform ist eine Kameraeinheit 35 vorgesehen, die mit zwei Spiegeln 49 und 50 zusammenwirkt. Es sind je Spiegel 49 bzw. 50 ein Durchbruch 47 im Türinnenblech 15 vorgesehen, wobei beide Durchbrüche 47 jeweils mittels einer entsprechenden Scheibe 48 fluiddicht verschlossen sind. Die Kameraeinheit 35 ist um einen Drehpunkt 38 verdrehbar angeordnet und wirkt je nach Stellung entweder mit dem einen Spiegel 49 oder mit dem anderen Spiegel 50 zusammen. Bei einem Zusammenwirken mit dem Spiegel 49, wie in Fig. 16 dargestellt, erfolgt eine Erfassung des Spülraums 4 durch den in Höhenrichtung nach Fig. 16 oberen Durchbruch 47, was eine visuelle Erfassung der Besteckschublade und des Oberkorbs gestattet. Der Unterkorb und der Oberkorb sind durch den in Höhenrichtung unteren Durchbruch 47 erreichbar, zu welchem Zweck die Kameraeinheit 35 um 180° zu verdrehen ist, so dass ein Zusammenwirken mit dem Spiegel 50 stattfinden kann.

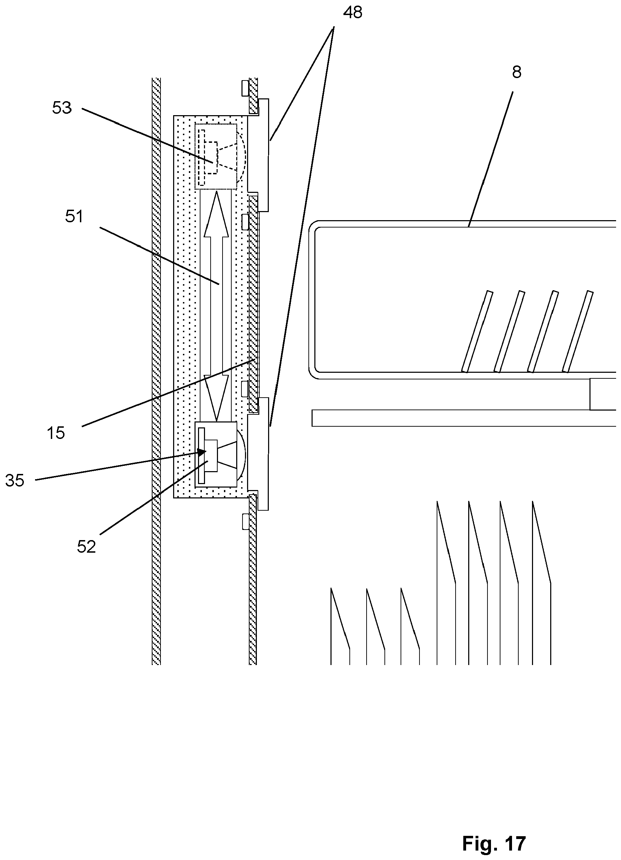

Gemäß einer weiteren Variante, die in Fig. 17 dargestellt ist, ist die Kameraeinheit 35 in Entsprechung des Pfeils 51 translatorisch verfahrbar, wobei die Kameraeinheit 35 eine untere Position 52 und eine obere Position 53 einnehmen kann. In der jeweiligen Position wirkt die Kameraeinheit 35 mit einem entsprechenden Durchbruch im Türinnenblech 15 zusammen. Gemäß dem gezeigten Ausführungsbeispiel ist zur Abdeckung der Durchbrüche jeweils eine Scheibe 48 vorgesehen, es kann aber auch eine gemeinsame Scheibe vorgesehen sein.

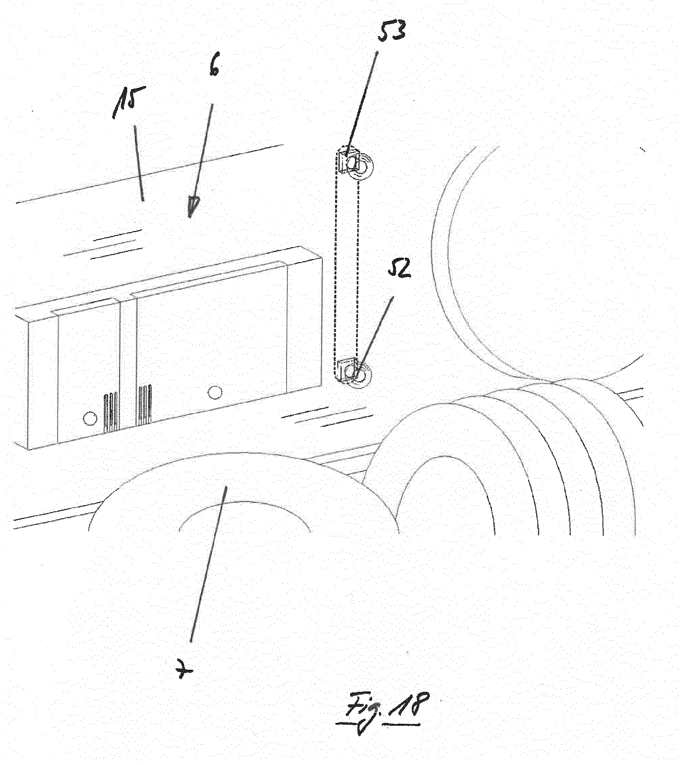

Fig. 18 zeigt die Ausführungsform nach Fig. 17 aus Richtung des Spülraums 4, wobei die untere Position 52 der Kameraeinheit 35 als auch die obere Position 53 der Kameraeinheit 35 erkennbar ist. Denkbar wäre in diesem Zusammenhang auch eine schlitzförmige Durchbruchausgestaltung, so dass die Kamera 35 auch Zwischenpositionen zwischen der unteren Position 52 und der oberen Position 53 einnehmen kann.

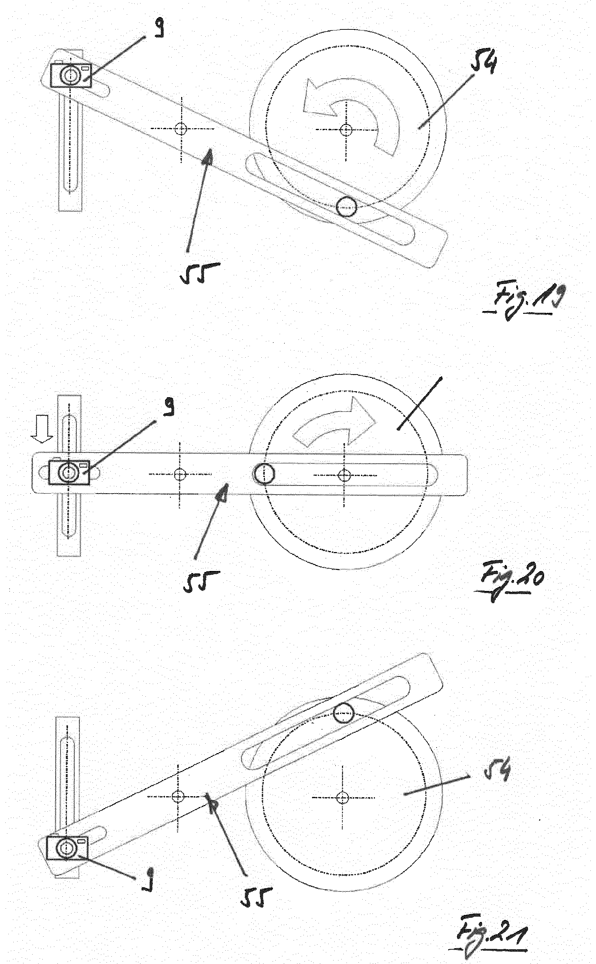

Zwecks translatorischer Verfahrbewegung der Kameraeinheit 35 kann eine Anordnung vorgesehen sein, wie diese in den Figuren 19 bis 21 in unterschiedlichen Stellungen gezeigt ist. Gemäß dieser besonderen Ausführungsform ist unter Zwischenschaltung eines Getriebes 55 eine Wirkverbindung zwischen der Kamera 9 und einem von der Geschirrspülmaschine 1 ohnehin bereitgestellten, verdrehbaren Vorratsbehälter 54 vorgesehen. Eines gesonderten Antriebs zur Bewegung der Kamera 9 bedarf es gemäß dieser Ausführungsform nicht.

Der Vorratsbehälter 54 beherbergt Reinigungsmittel, wobei es für ein Ausschleusen von Reinigungsmittel vorgesehen ist, dass der Vorratsbehälter 54 mittels eines dafür vorgesehenen Elektroantriebs verdreht. Diese ohnehin vorgesehene Einrichtung der Geschirrspülmaschine 1 wird gemäß dem Ausführungsbeispiel nach den Figuren 19 bis 21 dazu genutzt, auch eine Verfahrbewegung der Kamera 9 zu bewirken. Es ist zu diesem Zweck ein Getriebe 55 in Form eines Schubkurbeltriebs vorgesehen, das die Verdrehbewegung des Vorratsbehälters 54 in eine translatorische Verfahrbewegung der Kamera 9 umwandelt. Im Ergebnis kann so durch eine Verdrehbewegung des Vorratsbehälters 54 eine Verfahrbewegung der Kamera 9 erreicht werden, wie dies in den Figuren 19 bis 21 beispielhaft anhand dreier möglicher Kamerapositionen dargestellt ist.

Die Kamera 9 bzw. die Kameraeinheit 35 kann der Beladungserkennung und/oder der Anschmutzungserkennung dienen. Sie kann auch dazu verwendet werden, ein Bild vom Spülraum auf ein vernetztes, insbesondere mobiles Endgerät zu übertragen. So kann beispielsweise ein Kundendienst den Spülraum während einer bestimmungsgemäßen Verwendung der Geschirrspülmaschine in Augenschein nehmen und die ordnungsgemäße Funktion beispielsweise der Sprüheinrichtung prüfen.

### Bezugszeichen

- 1: Geschirrspülmaschine
- 2: Gehäuse
- 3: Behandlungsbehälter, Spülbehälter
- 4: Behandlungsraum, Spülraum
- 5: Beschickungsöffnung
- 6: Behandlungsraumtür, Spülraumtür
- 7: Behandlungsgut, Spülgut
- 8: Behandlungsgutträger, Spülgutträger
- 9: Kamera
- 10: Erfassungsbereich der Kamera
- 11: Erfassungsbereich der Kamera
- 12: Erfassungsbereich der Kamera
- 13: Erfassungsbereich der Kamera
- 14: Türaußenblech
- 15: Türinnenblech
- 16: Hohlraum
- 17: Optik
- 18: Durchbruch
- 19: Scheibe
- 20: Spiegel
- 21: Drehpunkt
- 22: Antrieb
- 23: Pfeil
- 24: Pfeil
- 25: Anlenkpunkt
- 26: Pfeil
- 27: Pfeil
- 28: Drehpunkt
- 29: Elektromotor
- 30: Getriebe
- 31: Drehscheibe
- 32: umlaufende Nut
- 33: Führungsstift
- 34: Leuchtmittel
- 35: Kameraeinheit
- 36: Schwenkvorrichtung
- 37: Drehachse
- 38: Drehachse
- 39: Drehteil
- 40: Schwenkteil
- 41: Bedien- und Steuereinheit
- 42: mobiles Empfangsgerät
- 43: Funkverbindung
- 44: Pfeilsymbolik
- 45: Beobachtungspunkt
- 46: Bild vom Spülraum
- 47: Durchbruch
- 48: Scheibe
- 49: Spiegel
- 50: Spiegel
- 51: Pfeil
- 52: untere Position
- 53: obere Position
- 54: Vorratsbehälter
- 55: Getriebe

## Patentansprüche

1. Haushaltsgerät, insbesondere Geschirrspülmaschine, mit einem einen Behandlungsraum (4) bereitstellenden Behandlungsbehälter (3), der zur Beschickung mit Behandlungsgut (7) eine Beschickungsöffnung (5) aufweist, mit einer Behandlungsraumtür (6), mittels welcher die Beschickungsöffnung (5) verschließbar ist, und mit einer Kamera (9), die der visuellen Erfassung des Behandlungsraums (4) dient, wobei
der von der Kamera (9) erfassbare Bereich (10) des Behandlungsraums (4) einstellbar ist,
**dadurch gekennzeichnet,**
**dass** die Behandlungsraumtür (6) ein Türaußenblech (14), ein Türinnenblech (15) und einen dazwischen angeordneten Hohlraum (16) aufweist, wobei das Türinnenblech (15) mit einem Durchbruch (18, 47) ausgerüstet ist, der fluiddicht mittels einer Abdeckung (19, 48) verschlossen ist,
ferner **dadurch gekennzeichnet,**
**dass** die Kamera (9) verschieb- und/oder verschwenkbar gelagert innerhalb des bereitgestellten Hohlraums (16) angeordnet ist
und/oder
die Kamera (9) als Teil einer Kameraeinheit (35) ausgebildet ist, wobei die
Kameraeinheit (35) verschieb- und/oder verschwenkbar gelagert innerhalb des Hohlraums (16) angeordnet ist
und/oder
eine mit der Kamera (9) oder der Kameraeinheit (35) zusammenwirkende optische Einrichtung vorhanden ist, die verschieb- und/oder verschwenkbar gelagert und
innerhalb des Hohlraums (16) angeordnet ist,
und weiterhin **dadurch gekennzeichnet,**
**dass** der Behandlungsraum (4) durch den Durchbruch (18, 47) hindurch mittels der Kamera (9) oder der Kameraeinheit (35) visuell erfassbar ist.

2. Haushaltsgerät nach Anspruch 1,
**dadurch gekennzeichnet, dass**
die Kamera (9) als Teil einer Kameraeinheit (35) ausgebildet ist, wobei die Kameraeinheit (35) ein Gehäuse aufweist, in dem die Kamera (9) angeordnet ist.

3. Haushaltsgerät nach Anspruch 1 oder 2,
**dadurch gekennzeichnet, dass**
die Kameraeinheit (35) eine mit der Kamera (9) zusammenwirkende Optik (17) aufweist.

4. Haushaltsgerät nach Anspruch 1,
**dadurch gekennzeichnet, dass**
die optische Einrichtung eine reflektierende Fläche bereitstellt.

5. Haushaltsgerät nach einem der vorhergehenden Ansprüche,
**gekennzeichnet durch**
einen Antrieb (22) für die Kamera (9), die Kameraeinheit (35) und/oder die optische Einrichtung, wobei der Antrieb (22) vorzugsweise ein Thermoelement und/oder einen Elektromotor aufweist.

6. Haushaltsgerät nach einem der vorhergehenden Ansprüche,
**gekennzeichnet durch**
eine Schwenkvorrichtung (36), die die Kamera (9) oder die Kameraeinheit (35) trägt und mittels welcher die Kamera (9) oder die Kameraeinheit (35) um zwei senkrecht aufeinander stehende Drehachsen (37, 38) verschwenkbar ist.

7. Haushaltsgerät nach einem der vorhergehenden Ansprüche,
**dadurch gekennzeichnet, dass**
die Verschiebe- und/oder Verschwenkbewegung der Kamera (9) oder der Kameraeinheit (35) fernsteuerbar ist.

8. Haushaltsgerät nach einem der vorhergehenden Ansprüche,
**gekennzeichnet durch**
ein Verschlusselement, das aus einer die Kamera (9) oder die Kameraeinheit (35) abdeckenden Verschlussstellung in eine die Kamera (9) oder die Kameraeinheit (35) freigebenden Gebrauchsstellung und umgekehrt überführbar ist.

9. Haushaltsgerät nach Anspruch 8,
**gekennzeichnet durch**
Mittel, die ein Überführen des Verschlusselements aus der Verschlussstellung in die Gebrauchsstellung und umgekehrt in Abhängigkeit der Stellung der Behandlungsraumtür (6) bewirken.

## Claims

1. Domestic appliance, in particular a dishwasher, comprising a processing container (3), which provides a processing chamber (4) and has a loading opening (5) for loading with items to be processed (7), a processing chamber door (6), by means of which the loading opening (5) can be closed, and a camera unit (9) for visually capturing the processing chamber (4),
the region (10) of the processing chamber (4) that can be captured by the camera (9) being adjustable,
**characterized in that**
the processing chamber door (6) has a door outer panel (14), a door inner panel (15) and a cavity (16) arranged therebetween, the door inner panel (15) being equipped with an opening (18, 47) which is closed in a fluid-tight manner by means of a cover (19, 48),
further **characterized in that**
the camera (9) is displaceably and/or pivotably mounted within the provided cavity (16), and/or
the camera (9) is designed as a part of a camera unit (35), the camera unit (35) being displaceably and/or pivotably mounted within the cavity (16), and/or
an optical device which interacts with the camera (9) or the camera unit (35) is present, which optical device is displaceably and/or pivotably mounted and arranged within the cavity (16),
and further **characterized in that**
the processing chamber (4) can be visually detected through the opening (18, 47) by means of the camera (9) or the camera unit (35).

2. Domestic appliance according to claim 1,
**characterized in that**
the camera (9) is designed as a part of a camera unit (35), the camera unit (35) having a housing in which the camera (9) is arranged.

3. Domestic appliance according to either claim 1 or claim 2,
**characterized in that**
the camera unit (35) has an optical system (17) which interacts with the camera (9).

4. Domestic appliance according to claim 1,
**characterized in that**
the optical device provides a reflective surface.

5. Domestic appliance according to any of the preceding claims,
**characterized by**
a drive (22) for the camera (9), the camera unit (35), and/or the optical device, the drive (22) preferably having a thermocouple and/or an electric motor.

6. Domestic appliance according to any of the preceding claims,
**characterized by**
a pivoting apparatus (36) which supports the camera (9) or the camera unit (35) and by means of which the camera (9) or the camera unit (35) can be pivoted about two axes of rotation (37, 38) which are perpendicular to one another.

7. Domestic appliance according to any of the preceding claims,
**characterized in that**
the displacement and/or pivoting movement of the camera (9) or the camera unit (35) can be controlled remotely.

8. Domestic appliance according to any of the preceding claims,
**characterized by**
a closure element which can be transferred from a closed position covering the camera (9) or the camera unit (35) into a use position exposing the camera (9) or the camera unit (35), and vice versa.

9. Domestic appliance according to claim 8,
**characterized by**
means which cause the closure element to be transferred from the closed position into the use position, and vice versa, depending on the position of the processing chamber door (6).

## Revendications

1. Appareil électroménager, en particulier lave-vaisselle, comportant un récipient de traitement (3) fournissant un espace de traitement (4), lequel récipient de traitement présente une ouverture de chargement (5) pour le chargement d'articles à traiter (7), comportant une porte d'espace de traitement (6) au moyen de laquelle l'ouverture de chargement (5) peut être fermée, et comportant une caméra (9) servant à la détection visuelle de l'espace de traitement (4), dans lequel
la zone (10) de l'espace de traitement (4) détectable par la caméra (9) est réglable,
**caractérisé en ce que**
la porte d'espace de traitement (6) présente une tôle extérieure de porte (14), une tôle intérieure de porte (15) et un espace creux (16) disposé entre les deux, dans lequel la tôle intérieure de porte (15) est équipée d'un passage (18, 47) fermé de manière étanche aux fluides par un élément de recouvrement (19, 48),
en outre **caractérisé en ce que**
la caméra (9) est disposée à l'intérieur de l'espace creux (16) fourni et montée de manière à pouvoir coulisser et/ou pivoter et/ou
la caméra (9) est conçue comme partie d'une unité formant caméra (35), dans lequel l'unité formant caméra (35) est disposée à l'intérieur de l'espace creux (16) et montée de manière à pouvoir coulisser et/ou pivoter et/ou
un système optique coopérant avec la caméra (9) ou l'unité formant caméra (35) est prévu, lequel est disposé à l'intérieur de l'espace creux (16) et monté de manière à pouvoir coulisser et/ou pivoter,
et en outre **caractérisé en ce que**
l'espace de traitement (4) peut être détecté visuellement à travers le passage (18, 47) au moyen de la caméra (9) ou de l'unité formant caméra (35).

2. Appareil électroménager selon la revendication 1,
**caractérisé en ce que**
la caméra (9) est conçue comme partie d'une unité formant caméra (35), dans lequel l'unité formant caméra (35) présente un boîtier dans lequel est disposée la caméra (9).

3. Appareil électroménager selon la revendication 1 ou 2,
**caractérisé en ce que**
l'unité formant caméra (35) présente une optique (17) coopérant avec la caméra (9).

4. Appareil électroménager selon la revendication 1,
**caractérisé en ce que**
le système optique fournit une surface réfléchissante.

5. Appareil électroménager selon l'une des revendications précédentes,
**caractérisé par**
un entraînement (22) pour la caméra (9), l'unité formant caméra (35) et/ou le système optique, dans lequel l'entraînement (22) présente de préférence un thermocouple et/ou un moteur électrique.

6. Appareil électroménager selon l'une des revendications précédentes,
**caractérisé par**
un dispositif de pivotement (36) qui porte la caméra (9) ou l'unité formant caméra (35) et au moyen duquel la caméra (9) ou l'unité formant caméra (35) peut pivoter autour de deux axes de rotation (37, 38) perpendiculaires l'un à l'autre.

7. Appareil électroménager selon l'une des revendications précédentes,
**caractérisé en ce que**
le mouvement de coulissement et/ou de pivotement de la caméra (9) ou de l'unité formant caméra (35) peut être commandé à distance.

8. Appareil électroménager selon l'une des revendications précédentes,
**caractérisé par**
un élément de fermeture qui peut être transféré d'une position de fermeture recouvrant la caméra (9) ou l'unité formant caméra (35) à une position d'utilisation libérant la caméra (9) ou l'unité formant caméra (35) et inversement.

9. Appareil électroménager selon la revendication 8,
**caractérisé par**
des moyens qui provoquent un transfert de l'élément de fermeture de la position de fermeture à la position d'utilisation et inversement en fonction de la position de la porte d'espace de traitement (6).
